# EUROPÄISCHE PATENTSCHRIFT

(11) **EP 2 706 034 B1**
(45) Veröffentlichungstag und Bekanntmachung des Hinweises auf die Patenterteilung: **04.11.2015**
(21) Anmeldenummer: 12183680.3
(22) Anmeldetag: 10.09.2012
(51) Int. Cl.: B66C 13/06

(54) **Aktiver Tilger für tieffrequent schwingende Strukturen**
Active damper for low frequency oscillating structures
Réducteur actif pour structures oscillantes de basse fréquence

(43) Veröffentlichungstag der Anmeldung: 12.03.2014
(73) Patentinhaber: Integrated Dynamics Engineering GmbH, 65479 Raunheim (DE)
(72) Erfinder: Kropp, Dr. Peter, 55130 Mainz (DE); Sinn, Wolfram, 63071 Offenbach (DE)
(74) Vertreter: Blumbach Zinngrebe

(56) Entgegenhaltungen:
- EP-A1- 0 391 130
- EP-A1- 0 612 058
- EP-A1- 2 327 651
- EP-A2- 0 805 288
- WO-A1-92/20482
- WO-A1-2008/145122
- DE-A1-102004 004 299
- JP-A- S60 155 030
- US-A- 5 666 770
- US-A1- 2003 159 508

## Beschreibung

Die Erfindung betrifft allgemein schwingungsdämpfende Einrichtungen. Im Speziellen betrifft die Erfindung die aktive Schwingungsdämpfung eines schwingfähigen Systems mittels einer durch einen Antrieb bewegten Tilgermasse.

Als Schwingungstilger, auch kurz als Tilger oder Tilgerpendel bezeichnet, werden Schwingungsdämpfer bezeichnet, die nicht zwischen zwei Teilen, sondern lediglich an einem schwingenden Teil einer Vorrichtung befestigt sind. Dabei folgt aufgrund einer streck- oder stauchbaren Verbindung einer Masse des Tilgers zum schwingenden Teil die Masse des Tilgers den Bewegungen des Teils mit einer Verzögerung. Mit der Streckung und/oder Stauchung wird der Schwingungsbewegung Energie entzogen und auf diese Weise eine Dämpfung bewirkt.

Typischerweise weisen die Masse mit der deformierbaren, also streck- stauch- und/oder tordierbaren Verbindung eine Eigenfrequenz auf. Diese wird im Allgemeinen in einem bestimmten Verhältnis zu der zu dämpfenden Schwingungsfrequenz eingestellt. Bei dieser optimierten Frequenz wird die Masse weit ausgelenkt, so dass entsprechend große Kräfte und entsprechend große Energien vom schwingenden Teil zur Masse des Tilgers übertragen werden.

Aus der DE 197 25 770 A1 ist eine Vorrichtung zur Dämpfung von Schwingungen mit einem Schwingungstilger bekannt. Der Schwingungstilger weist eine elastisch an das elastische System angekoppelte Masse auf, welche über einen ansteuerbaren und in der Arbeitsrichtung des Schwingungstilgers längenveränderlichen Aktuator an das elastische System angekoppelt ist. Damit soll eine Dämpfung von Schwingungen in einem gegenüber einem passiven Schwingungsdämpfungssystem vergrößerten Frequenzbereich erzielt werden. Ähnliche Prinzipien finden sich auch in der DE 10 2006 056 757 A1 und DE 10 2010 002 262 A1 zur Dämpfung von Gehäuseschwingungen.

Ein anderes Wirkprinzip liegt den in der DE 6 941 4628 T2 und EP 6 183 80 B1 beschriebenen Tilgern zugrunde. Hier sind die Tilger an pendelartigen Strukturen angebracht und stellen quasi ein Tilger-Pendel dar. Speziell ist dabei ein Schwingungstilger für Seilbahngondeln vorgesehen, wobei ein bewegliches Dämpfmassenelement an der Pendelstruktur der Gondel oberhalb des Schwerpunkts derselben befestigt ist. In der EP 6 183 80 B1 wird weiterhin eine Übersicht über industrielle Anwendungen von Tilgern gegeben, wie sie auch für die Erfindung in Frage kommen.

In der DE 10 2006 053 232 B4 wird ein Tilger mit zwei Wirkrichtungen beschrieben. Dieser Tilger ist dazu gedacht, z.B. eine Rohrleitungsschwingung zu bedämpfen und kann auch aktiv betrieben werden. Der aktive Tilger weist mindestens zwei in unterschiedliche Bewegungsrichtungen wirkende Aktoren und eine Befestigungsvorrichtung auf. Die Aktoren sind über Blattfedern mit der Befestigungsvorrichtung verbunden. Die beiden Aktoren sind zusätzlich über ein Verbindungselement miteinander gekoppelt.

In der DE 10 2010 039 977 A1 ist ein kolbenförmiger, passiver Tilger beschrieben, der eine Ausgleichsmasse innerhalb eines Kolbens mit definierter Reibung beweglich hält.

Mit der Erfindung sollen insbesondere tieffrequent schwingende Strukturen mit mehr als einem Masse-FederGlied, beziehungsweise deren Schwingungsverhalten durch mehrere gekoppelte Masse-Feder-Glieder beschreibbar ist, so gedämpft werden können, dass die Schwingamplitude derselben deutlich minimiert wird. Ein Einsatzgebiet der Erfindung sind beispielsweise mobile oder auch stationäre Röntgenscanner.

JPS60155030 offenbart ein aktiver Schwingungstilger gemäß dem Oberbegriff des Anspruchs 1.

Dazu ist ein aktiver Schwingungstilger zur Schwingungsdämpfung eines freitragenden Abschnitts eines Trägers gemäß Anspruch 1 vorgesehen, wobei der Schwingungstilger eine Masse aufweist, die federlos, typischerweise mechanisch, über einen Antrieb, welcher von einer Steuerungseinrichtung des Schwingungstilgers gesteuert wird, mit einer Befestigungseinrichtung zur Befestigung des Antriebs an einem zu dämpfenden Träger gekoppelt ist, so dass durch eine Bewegung der Masse relativ zur Befestigungseinrichtung eine durch die Bewegung verursachte Trägheitskraft über den Antrieb direkt auf die Befestigungseinrichtung übertragen wird. Die Steuerungseinrichtung umfasst einen Bewegungssensor, wobei die Steuerungseinrichtung eingerichtet ist, in Abhängigkeit von den Signalen des Bewegungssensors den Antrieb zu steuern und auf diese Weise Schwingungen des Trägers zu dämpfen.

Mit anderen Worten ist die Tilgermasse einerseits federlos oder starr mit einem ersten Teil des Antriebs, ein zweiter, gegenüber dem ersten Teil beweglicher Teil des Antriebs seinerseits federlos mit der Befestigungseinrichtung verbunden, so dass als Freiheitsgrad der Bewegung der Tilgermasse gegenüber dem zu dämpfenden Träger und/oder der Befestigungseinrichtung nur eine Bewegung des Antriebs verbleibt.

Entsprechend sieht die Erfindung auch einen Träger mit aktiver Tilgung vor, wobei der Träger an zumindest einem Ende festgehalten ist und einen freitragenden Abschnitt aufweist, an welchem ein Schwingungstilger, wie vorstehend beschrieben, befestigt ist, wobei der Schwingungstilger zumindest eine beweglich gelagerte Masse aufweist, welche über zumindest einen Antrieb entlang zumindest einer Richtung bewegbar ist, wobei die Masse über den Antrieb so an den freitragenden Abschnitt des Trägers gekoppelt ist, dass der Antrieb auf den Abschnitt bei Bewegung des Gewichts direkt und ohne Zwischenschaltung eines Federglieds eine Kraft auf den Abschnitt des Trägers ausübt.

Die Tilgerkräfte werden demgemäß nicht durch eine Dämpfungs-/Trägheitskombination erzeugt, sondern nur durch die Beschleunigung der Tilgermasse, die durch einen Regelkreis aktiv so gesteuert wird, dass die durch den Bewegungssensor detektierte Bewegung durch entgegengesetzte Kräfte bedämpft wird.

Es wird hier also eine direkte und über den Antrieb vermittelte feste Anbindung an das zu steuernde System, wie etwa einen Arm mit freitragendem Ende hergestellt, ohne die übliche Tilger-Feder. Damit erübrigt sich die Auslegung von Federsteifigkeiten in Bezug auf das zu kontrollierende Schwingsystem. Die durch die Bewegung der Tilgermasse erzeugten Trägheitskräfte werden über den Antrieb also direkt auf den zu dämpfenden Träger vermittelt. Ähnlich wie auf einer Schaukel das Mitschwingen mit den Beinen zu einer Verstärkung der Schaukelbewegung führt, würde das entgegengesetzte Schwingen mit Beinen und Körper dazu führen, dass die Schaukelbewegung zum Erliegen kommt. Dieses Prinzip macht sich auch die Erfindung zunutzen, wobei mehrere Schwingungsmoden unterschiedlicher Frequenz gedämpft werden können.

Es ist einem Fachmann ersichtlich, wie eine federlose Kopplung zwischen der Tilgermasse und dem zu dämpfenden Träger über den Antrieb herzustellen ist. Zwar wird man auch einer starren Verbindung eine Federkonstante zuordnen können, allerdings ist diese dann für die Kopplung der Tilgermasse wesentlich größer, als die Federkonstanten des zu dämpfenden Trägers. Entsprechend wesentlich höher ist dann auch die niedrigste Frequenz der Eigenschwingung des Systems aus Tilgermasse und Kopplung. Generell kann die federlose Kopplung zum Zwecke der Erfindung so ausgelegt werden, dass die niedrigste Eigenschwingung des Systems aus Tilgermasse und der Kopplung an den Träger, beziehungsweise an die Befestigungseinrichtung mindestens viermal, vorzugsweise mindestens achtmal höher ist, als die niedrigste Frequenz der Eigenschwingung des Trägers. Die Erfindung ist insbesondere zur Dämpfung von niederfrequenten Schwingungen vorgesehen. Entsprechend weist die Kopplung der Tilgermasse über den Antrieb zur Befestigungseinrichtung zur Erzielung einer federlosen Verbindung vorzugsweise eine deutlich höhere Frequenz der niederfrequentesten Eigenschwingung auf. Diese beträgt vorzugsweise mindestens 10 Hz, besonders bevorzugt mindestens 20 Hz.

Als Bewegungssensoren werden Geschwindigkeitssensoren, wie etwa ein Geophon bevorzugt. Denkbar ist aber auch ein Beschleunigungssensor als Bewegungssensor. Ein Geophon ist besonders geeignet, weil es bei niedrigen Frequenzen einen hohen Signal/Rauschabstand aufweist.

Der erfindungsgemäße Tilger ist insbesondere dazu gedacht, an einem schwingfähigen Mehr-Freiheitsgrad-System, im Folgenden vereinfacht und beispielhaft "Arm" genannt, angebracht zu werden, um das Gesamtsystem in seinen Schwingungen zu dämpfen. Der Tilger umfasst dabei vorzugsweise als Antrieb einen Linearantrieb, mit welchem die Masse in einer Achsrichtung bewegt werden kann, sowie ein Gehäuse und eine Befestigungseinrichtung mit der der Tilger am Ende des Arms befestigt werden kann. An einem der nicht-beweglichen Teile des Tilgers ist der Bewegungssensor, vorzugsweise ein Geschwindigkeitsaufnehmer angeordnet, welche die Bewegungen des Armendes aufnehmen und an einen Regelkreis der Steuerungseinrichtung geben kann.

Dieser Regelkreis gibt dann ein Steuersignal an den Linearantrieb in der Gestalt, dass die daraus resultierende Bewegung (bzw. die Beschleunigung, die zur Bewegung führt) eine Gegenkraft so auf das System ausübt, dass die Gesamtbewegung des Arms minimiert wird.

Die Erfindung wird nachfolgend anhand von Ausführungsbeispielen und unter Bezugnahme auf die beigeschlossenen Zeichnungen näher erläutert. Dabei verweisen gleiche Bezugszeichen in den Zeichnungen auf gleiche oder entsprechende Elemente. Es zeigen:
Fig. 1 eine Ansicht eines Ausführungsbeispiels eines schwingfähigen Systems in Form eines Röntgenscanners mit aktivem Tilger,
Fig. 2 eine Ansicht des Tilgers mit geöffnetem Gehäuse,
Fig. 3 eine Ansicht des Gehäuses des Tilgers von der gegenüberliegenden Seite.
Fig. 4 eine Prinzipskizze eines Feder-Massensystems,
Fig. 5A den Betrag der Übertragungsfunktion eines Zwei-Massen-Schwingers,
Fig. 5B die zugehörige Phase der Übertragungsfunktion des Zwei-Massen-Schwingers,
Fig. 6A und 6B nochmals die Amplitude (Fig. 6A) und Phase (Fig. 6B) der Übertragungsfunktion, wie in Fig. 5A, 5B dargestellt, sowie jeweils Amplitude und Phase nach Steuerung durch eine erste Regelschleife.
Fig. 7A und 7B die Amplitude und Phase der Übertragungsfunktion nach zusätzlicher Regelung mittels einer zweiten Regelschleife,
Fig. 8 ein 3D-Diagramm des Zusammenhangs zwischen der Schwingungsamplitude eines Arms mit angebrachtem aktiven Tilger, der Beschleunigung und der Masse des Tilgergewichts,
Fig. 9 ein Schema eines Ausführungsbeispiels einer Steuerungsvorrichtung, und
Fig. 10 eine Ausführungsform der Erfindung mit mehreren Antrieben.

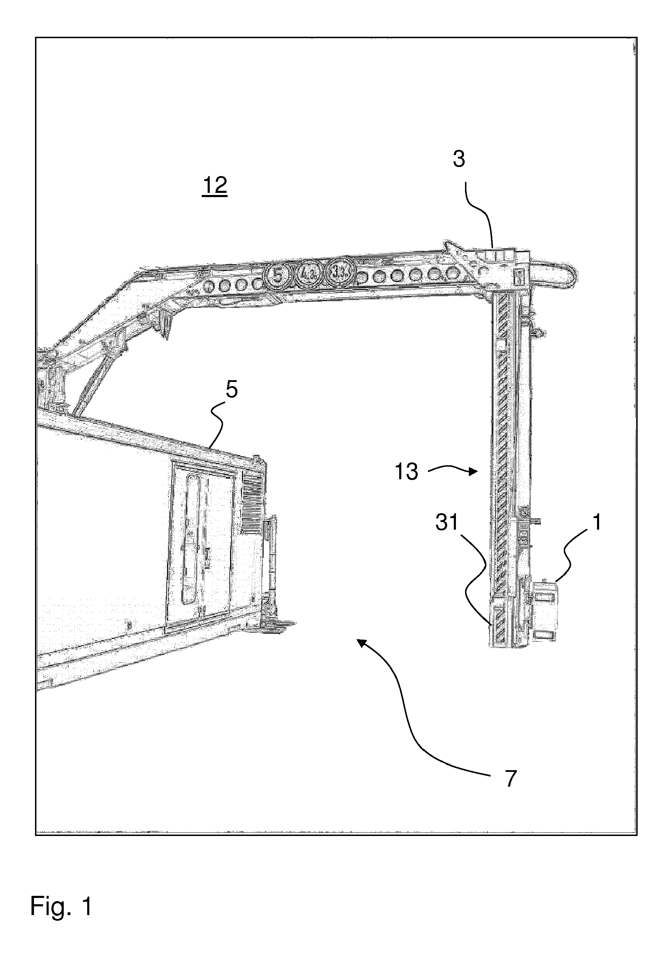

Eine Ausführungsform eines schwingfähigen Systems, welches einen der Anwendungsfälle darstellt, ist in Fig. 1 dargestellt. Bei diesem System handelt es sich um einen Röntgenscanner 12 zum Durchleuchten von Lastkraftwagen oder Containern.

Der Röntgenscanner 12 dieses Ausführungsbeispiels umfasst einen Container 5, in welchem auch das Messequipment für eine Röntgenaufnahme untergebracht ist. Am Container 5 ist ein Arm 3 befestigt, an welchem die Detektoren 13 für die Röntgenstrahlung angebracht sind. Die Detektoren 13 befinden sich auf der dem Container zugewandten Seite des Arms 3 und sind daher in der Ansicht der Fig. 1 durch den Arm verdeckt. Bei dem in Fig. 1 gezeigten Beispiel sind die Detektoren 13 entlang des vertikalen Abschnitts des Arms 3 verteilt, um einen vom Röntgengenerator erzeugten, vertikal aufgefächerten Fächerstrahl zu erfassen.

Am freien, beziehungsweise nicht festgehaltenen Ende 31 des Armes 3 ist ein erfindungsgemäßer aktiver Tilger 1 mittels einer nicht dargestellten Befestigungseinrichtung starr befestigt. Für die mobile Anwendung dieser Anwendung kann der Container 5 auf den Anhänger eines Sattelschleppers gestellt werden. Damit ist es möglich, ein stehendes Objekt, zum Beispiel einen LKW mit Ladung, durch Vorbeifahrt mittels Röntgen zu untersuchen, wobei der LKW oder allgemeiner das zu untersuchende Objekt den Zwischenraum 7 zwischen Container 5 und Ende 31 des Arms 3 durchquert. Im Gegensatz zu stationären Installationen, bei denen die Fahrerkabine im Allgemeinen besetzt sein muss, weil der LKW durch den stationären Röntgenscanner hindurchfährt und daher die LKW-Kabine nicht durchleuchtet werden darf, können mobile Röntgenscanner auch die Fahrerkabine untersuchen, weil diese nicht besetzt sein muss.

Während der Fahrt mit dem Sattelschlepper erfährt der Arm 3 eine Fußpunktanregung durch Unebenheiten des Untergrunds. Damit regt dieser Bewegungen des Containers 5 und damit des Arms 3 an. Die Schwingungen des Arms 3 wiederum können so stark werden, dass die Röntgendetektoren an dessen Innenseite aus dem Röntgenstrahl des Messcontainers 5 schwingen und damit kein Bild erzeugen.

Ohne Beschränkung auf das in Fig. 1 gezeigten Beispiel sieht die Erfindung daher auch einen Röntgenscanner 12 vor, welcher einen Arm 3 umfasst, welcher an einem Ende verankert und am anderen, freien, beziehungsweise nicht verankerten Ende 31 mit einem Röntgendetektor 13 oder einem Röntgenstrahlungsgenerator versehen ist, wobei an diesem freien Ende 31 ein aktiver Schwingungstilger 1 gemäß der Erfindung angeordnet ist.

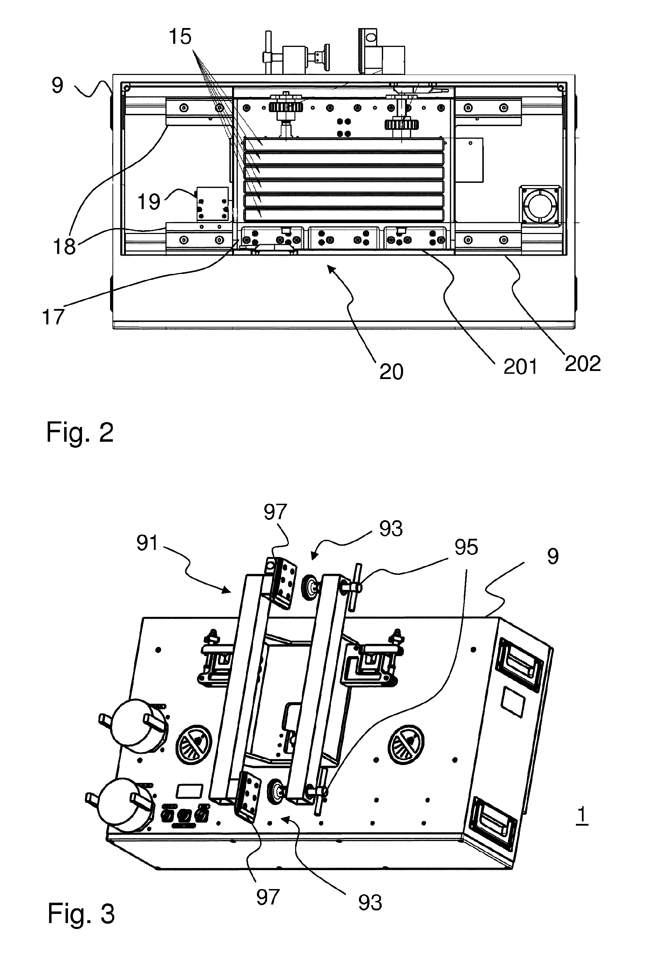

In Fig. 2 ist der Tilger 1 mit geöffnetem Gehäuse 9 dargestellt. Es sind dort mehrere plattenförmige Massen 15 sichtbar, die auf einem auf Schienen 18 verfahrbaren Schlitten 17 montiert sind. Der Schlitten 17 beherbergt auch einen Teil des Antriebs 20 in Form eines Linearmotors. Hinter dem Schlitten ist im Gehäuse 9 auch der Bewegungssensor 19 angeordnet. Der Antrieb 20 umfasst zwei zueinander bewegliche Teile 201, 202, wobei das Teil 201 federlos mit den Massen 15, das Teil 202 federlos mit dem Gehäuse 9 verbunden ist. Im Speziellen wird das mit dem Gehäuse 9 verbundene Teil 202 des Antriebs durch eine Schiene gebildet, auf welcher der Schlitten 17 mit dem anderen Teil 201 des Linearmotors läuft.

Der Tilger 1 wird, wie anhand der Fig. 1 und 2 ersichtlich, am äußersten, freien Ende des Arms 3 angebracht. Hier sind zwei Eigenmoden der Schwingung gleichzeitig messbar: Eine tieffrequente Mode, bei der der gesamte Arm um den Fußpunkt, also das festgehaltene, beziehungsweise verankerte Ende bewegt wird, sowie eine höherfrequente, bei der der vertikale Endteil des Arms um den oberen Aufhängepunkt schwingt.

Fig. 3 zeigt das Gehäuse 9 des Tilgers 1 von der gegenüberliegenden Seite. Auf dieser Seite ist eine Befestigungsvorrichtung 91 angeordnet, mit welcher der Tilger 1 an einem zu bedämpfenden Träger, also beispielsweise am Ende 31 des Arms 3 angebracht werden kann.

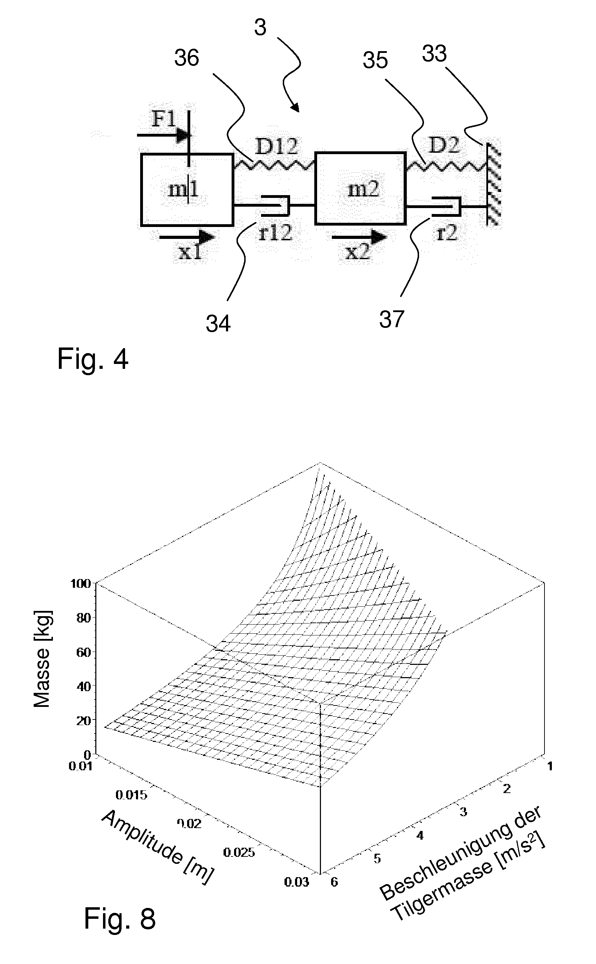

Fig. 4 zeigt eine Prinzipskizze eines Feder-Massen-Systems. Dieses Feder-Massen-System stellt ein Modell zur Beschreibung der Schwingungen eines einseitig befestigten Arms dar, wie etwa des anhand der Fig. 1 und 2 beschriebenen Arms eines Röntgenscanners.

Ein solcher Arm 3 kann regelungstechnisch wie in Fig. 4 dargestellt als Zwei-Massen-Schwinger mit den Massen m1 und m2 modelliert werden. Dabei ist die Masse m2 über eine Feder 35 mit Federkonstante D2 an einem festen Ende 33 befestigt. Gleichzeitig ist die Bewegung der Masse m2 gegenüber dem festgelegten Ende 33 durch ein Dämpfungsglied 37 mit Dämpfungskonstante r2 gedämpft.

An der Masse m2 ist wiederum eine Masse m1 über eine Feder 36 mit Federkonstante D21 befestigt, wobei die gegenseitige Bewegung der Massen m1, m2 durch ein Dämpfungsglied 34 mit Dämpfungskonstante r12 gedämpft ist.

Es lässt sich nun zeigen, dass mittels einer Regelung am äußeren, freien Ende des Systems, also bei m1 und bei dem in Fig. 1 gezeigten Beispiel entsprechend am Ende 31 auch der entfernte Massenschwinger m2 kontrollieren lässt, derart, dass dessen Bewegung minimiert wird, auch wenn man nur eine Kraft F1 an m1 wirken lässt.

Obwohl hier also der Tilger erfindungsgemäß ohne Tilgerfeder an den Arm angekoppelt ist, erinnert das System-Ersatzbild gemäß Fig. 4 wieder an einen Standard-Tilger, wobei die Federkonstante D12 und die Dämpfung r12 nicht durch den Tilger selbst, sondern durch das System (den Arm 3) gegeben sind.

Allerdings lässt sich das System nicht mit einem Standard-Tilger vergleichen, denn D12 und r12 entziehen sich der Parametrisierung, weil sie Systemeigenschaften sind.

Vielmehr obliegt es nun in hohem Maße einer Regelung, die Fehlanpassung der Eigenfrequenzen im Sinne eines Standard-Tilgers aufzuheben.

Für die Erfindung eignen sich dabei Methoden aus der Velocity-Feedback-Regelung, welche auch für aktive Schwingungsisolationssysteme bekannt sind. Gemäß einer Ausführungsform der Erfindung wird dazu das Sensorsignal eines Geschwindigkeitsmessers, wie etwa eines Geophons, welches proportional zur Bewegung von m1 ist, zurückgeführt durch einen Regler, welcher vorzugsweise digital ausgeführt in weiten Bereichen parametrisierbare Regelstrecken erlaubt.

Dieses Steuersignal kann dann auf einen Verstärker für den Antrieb, also bei dem in den Fig. 1, 2 gezeigten Beispiel einen Linearmotor gegeben werden.

Je nach Konfiguration kann dieser Verstärker dieses Signal als Sollsignal für einen Motor-Strom oder für eine Lineargeschwindigkeit verwenden. Die Verwendung direkt als Motor-Strom ist vorteilhaft, weil der Geschwindigkeit des Arms ja direkt eine Kraft entgegenwirken soll. Da der Strom auf den Linearmotor proportional zur Beschleunigung desselben ist, wäre dies sofort gegeben.

Andererseits haben Linearantriebe eine für kleine Amplitude nicht-lineare Charakteristik, die durch das Losbrechmoment der mechanischen Komponenten bei Beginn einer Bewegung verursacht wird. Es lässt sich daher nicht zuverlässig auf ein solches Signal bauen.

Stattdessen nimmt man die Phasenverschiebung von 90 Grad in Kauf und lässt das Stellsignal die Soll-Geschwindigkeit bestimmen. Dann nämlich kann ein Verstärker des Linearmotors, beziehungsweise allgemeiner des Antriebs die Aufgabe übernehmen, den Strom in jedem Moment so hoch zu treiben, dass die Soll-Geschwindigkeit auch erreicht wird. Eine Nicht-Linearität ist damit vermieden.

Gemäß einer Weiterbildung umfasst daher der Schwingungstilger einen Verstärker oder Treiber zur Bereitstellung des Versorgungsstroms des Antriebs, wobei die Steuerungseinrichtung eingerichtet ist, als Ausgabesignal ein der Soll-Geschwindigkeit des Antriebs entsprechendes Signal an den Verstärker auszugeben.

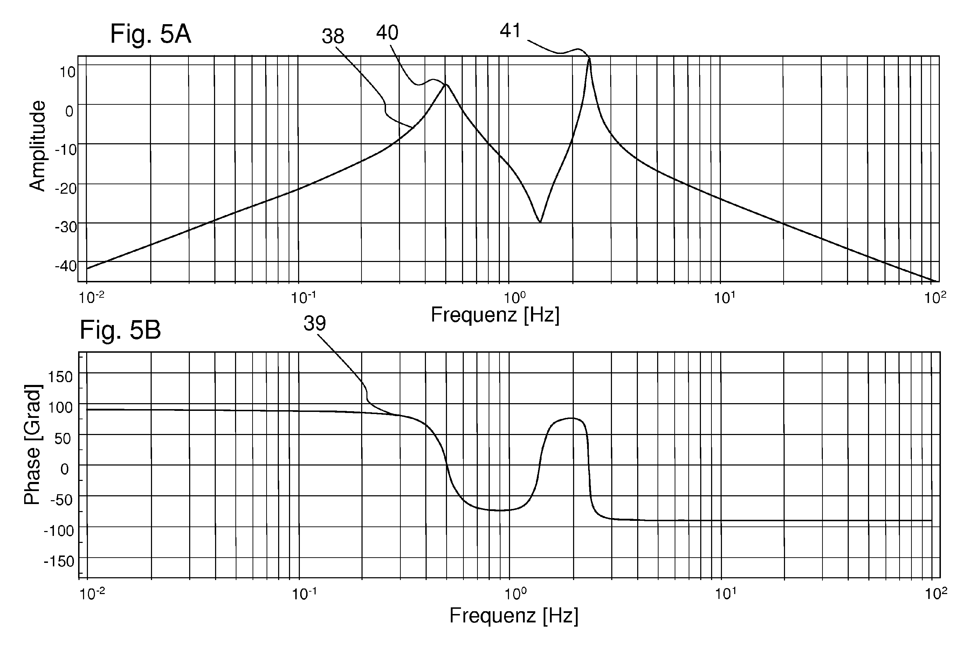

Die sogenannte Open Loop Übertragungsfunktion eines Zwei-Massenschwingers wie oben in Fig. 4 gezeigt, ist in den Fig. 5A und 5B dargestellt. Dabei zeigt Fig. 5A den Betrag, beziehungsweise die Amplitude 38 und Fig. 5B die Phase 39 der Übertragungsfunktion.

Zunächst einmal ist ersichtlich, dass die Amplitude der Übertragungsfunktion zwei Maxima aufweist. Das erste Maximum 40 des dargestellten Beispiels liegt bei einer Frequenz von etwa 0,5 Hz, das zweite, höherfrequente Maximum bei etwa 2,5 Hz. Diese Maxima entsprechen den oben genannten Schwingungsmoden des Arms 3. Das Maximum bei 0,5 Hz wird durch die tieffrequente Mode verursacht, bei der der gesamte Arm um den Fußpunkt schwingt. Die Eigenmode bei 2,5 Hz entspricht der Schwingung des vertikale Endteils des Arms um den oberen Aufhängepunkt.

Anhand von Fig. 5B erkennt man weiterhin, dass der Phasenverlauf für eine Regelung ungünstig gestaltet ist, weil er hier bei 0,5 Hz bei hoher Amplitude langsam durch Null läuft. Es ist daher ungünstig, durch einen einfachen P-Regler die Regelschleife zu schließen.

Es hat sich demgegenüber aber als sehr wirksam erwiesen, zwei Regelschleifen, beziehungsweise zwei Regler zur Regelung zu verwenden. Im Speziellen ist dazu in Weiterbildung der Erfindung, ohne Beschränkung auf die speziellen, hier beschriebenen Ausführungsbeispiele vorgesehen, dass die Steuerungseinrichtung zumindest zwei Regelschleifen aufweist, wobei die Regelschleifen eingerichtet sind, zu unterschiedlichen Schwingungsfrequenzen Steuersignale erzeugen.

Im Speziellen verwendet der erfindungsgemäße, hier nur exemplarisch gezeigte Tilger in Weiterbildung der Erfindung zwei Regelschleifen mit dem gleichen Eingangssignal vom Bewegungssensor, wie vorzugsweise einem Geophon und regelt zunächst den höherfrequenten Anteil in einer Regelschleife, dann den niederfrequenten Anteil.

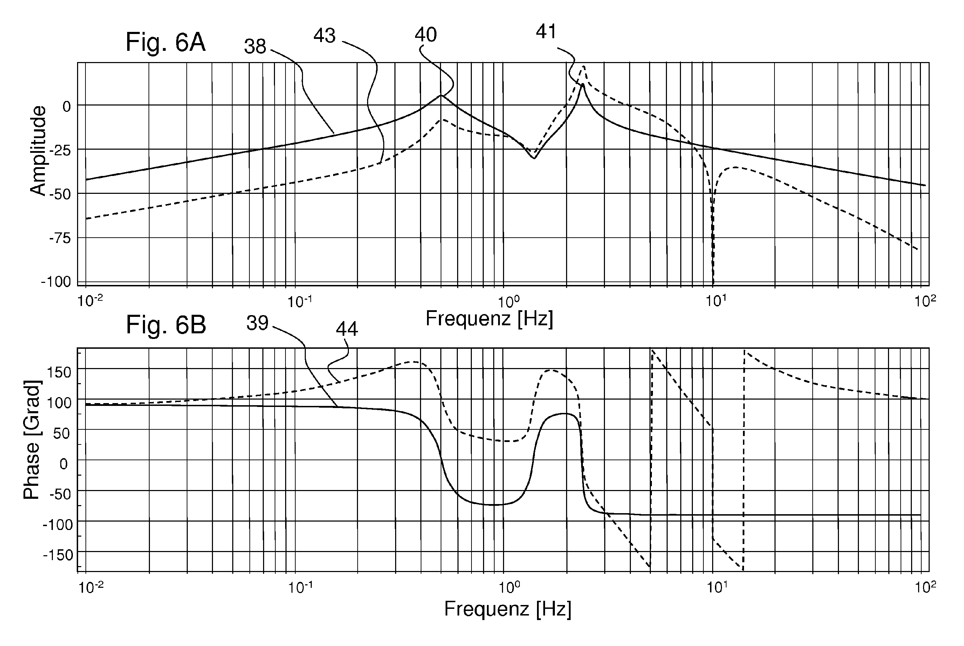

Gemäß noch einer Weiterbildung der Erfindung wird zur Regelung die Open Loop, beziehungsweise die Regelung einer ersten Regelschleife derart ausgebildet, dass die Amplitude bei 0.5 Hz abgesenkt und die Phase günstig so verschoben wird, dass die Frequenz dieser Schwingung nicht beeinflusst wird. Die Fig. 6A und 6B zeigen dazu nochmals die Amplitude und Phase des Ausführungsbeispiels der Fig. 5A und 5B und im Vergleich dazu die Amplitude 43 und Phase 44 nach Steuerung durch die erste Regelschleife. Im dargestellten Beispiel unterdrückt der Regler der ersten Regelschleife mittels einer Filterkaskade exemplarisch Frequenzen um 10 Hz.

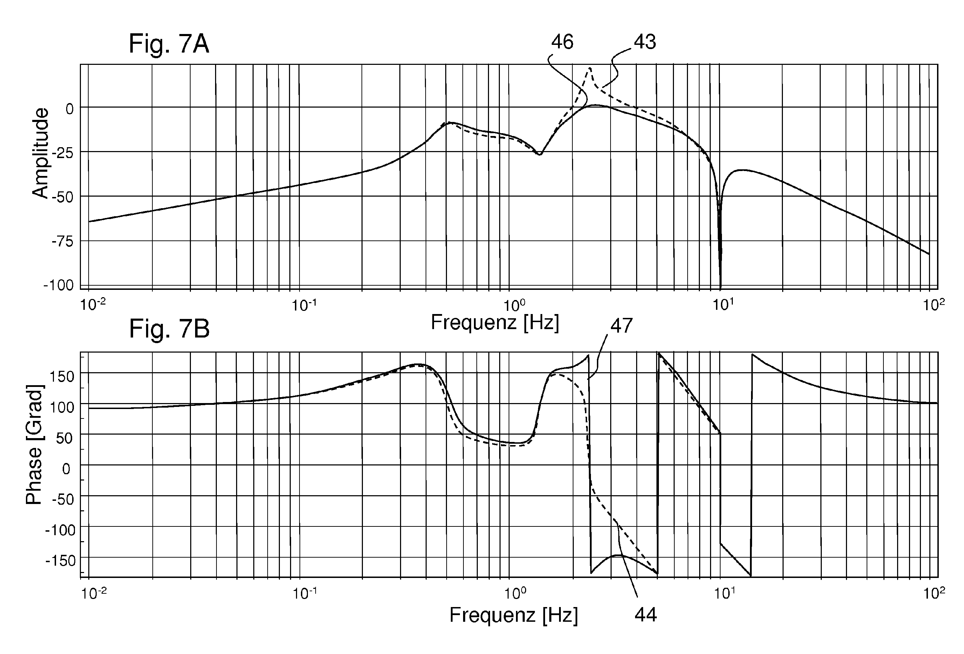

Die Fig. 7A und 7B zeigen schließlich die Übertragungsfunktionen für Amplitude (Fig. 7A, Bezugszeichen 46) und Phase (Fig. 7B, Bezugszeichen 47) am Tilger nach der zusätzlichen Regelung durch eine zweite Regelschleife. Die Amplitude 43 und Phase 44 nach Regelung durch die erste Regelschleife aus Fig. 6A, 6B sind zum Vergleich mit eingezeichnet.

Ohne Beschränkung auf das gezeigte Ausführungsbeispiel umfasst dabei die zweite Regelschleife gemäß einer Weiterbildung der Erfindung einen Bandpass. Allgemein kann daher zumindest eine von mehreren Regelschleifen der Steuerungseinrichtung einen Bandpass umfassen.

Mit der zweiten Regelschleife kann, wie aus einem Vergleich der Fig. 5A und 7A ersichtlich ist, auf diese Weise eine Unterdrückung der Schwingungsamplitude von über 20dB erreicht werden.

Die als Bandpass ausgebildete, beziehungsweise einen Bandpass umfassende zweite Regelschleife ist bei dem in Fig. 7A, 7B dargestellten Ausführungsbeispiel so parametriert, dass sie in einem Frequenzbereich, welche eine der Schwingungsmoden des Trägers, beziehungsweise in diesem Fall des Arms 3 einschließt, wirksam ist. Bei dem in Fig. 7A und 7B gezeigten Beispiel ist dies die höherfrequente Mode, die hier bei etwa 2,5 Hz liegt.

In den beiden Figuren ist dies daran ersichtlich, dass im Bereich um diese Frequenz herum die Phase und Amplitude geändert werden, wohingegen Schwingungen entfernterer Frequenzen, etwa oberhalb von 10 Hz oder unterhalb von 0,2 Herz nicht mehr beeinflusst, beziezungsweise geregelt werden. Gemäß einer Weiterbildung der Erfindung ist daher ein erfindungsgemäßer Träger mit aktiver Tilgung vorgesehen, bei welchem die Steuerungseinrichtung zumindest zwei Regelschleifen umfasst, die zur Regelung von Schwingungen unterschiedlicher Frequenzbereiche ausgebildet sind, wobei der Träger zumindest zwei Schwingungsmoden aufweist, und wobei zumindest eine der Regelschleifen als Bandpass ausgebildet ist und in einem Frequenzbereich regelt, welcher eine der Schwingungsmoden einschließt.

Das Beispiel zeigt, dass selbst bei ungünstiger Lage der Frequenzen und Phasen mittels der digital in weiten Bereichen einstellbaren Regelschleifen immer ein Parametersatz gefunden werden kann, der die Bewegungen wirksam bedämpft.

Es ist generell von Vorteil, wenn der Tilger an einem Punkt des Trägers angebracht wird, an dem nur eine Schwingungsmode auftritt, um gezielt nur diese zu bedämpfen. Stattdessen wird vorteilhaft mit Bedacht ein Punkt, wie hier der äußere Punkt des Arms 3 gewählt, bei dem die Überlagerung zumindest zweier Schwingungsmoden, beziehungsweise Eigenschwingungen auftritt.

Generell ist die Erfindung weiterhin besonders für die Dämpfung tieffrequenter Schwingungen geeignet. Vorzugsweise ist der Tilger zur Dämpfung von Schwingungen unterhalb von 50 Hz, bevorzugt unterhalb von 20 Hz, insbesondere bevorzugt unterhalb von 10 Hz ausgebildet. Bezogen auf die oben genannten mehreren Schwingungsmoden bedeutet dies, dass auch die Schwingungsmoden des Trägers bevorzugt in den vorstehend aufgeführten Frequenzbereichen liegen.

Anhand der vorstehend erläuterten, nur beispielhaften Ausführungsformen ist außerdem ersichtlich, dass im Unterschied zu bekannten Schwingungstilgern nicht einmalig ein Parameter des Tilgers auf ein System abgestimmt, sondern vorzugsweise mittels eines breitbandigen Rückkopplungs-Regelkreises jeglicher Anregung des Systems vorgebeugt wird. Es ist damit in der Lage, sowohl auf Fußpunktanregungs-induzierte, als auch extern verursachte Störungen zu reagieren. Wegen der aktiven Regelung ist es im Gegensatz zu jedem mittels Reibungs-/Dämpfungsverlust arbeitenden System zudem an Geschwindigkeit überlegen.

Damit kann die Auslegung des erfindungsgemäßen aktiven Tilgers darauf beschränkt werden, die verfahrbare Masse 15, die notwendigen Beschleunigungen und den Verfahrweg der Tilgermasse 15 auf das jeweilige schwingfähige System anzupassen.

Ein Beispiel für die Parameterabhängigkeit eines schwingfähigen Trägers zeigt das 3D-Schaubild der Fig. 8. Fig. 8. Das Diagamm zeigt für erwartete Armbewegungsamplituden die notwendigen Beschleunigungen der Tilgermassen und die benötigte Masse der Tilgermasse. Der in Fig. 8 gezeigte funktionale Zusammenhang kann über die Newtonsche Kraftgleichung einfach hergestellt werden.

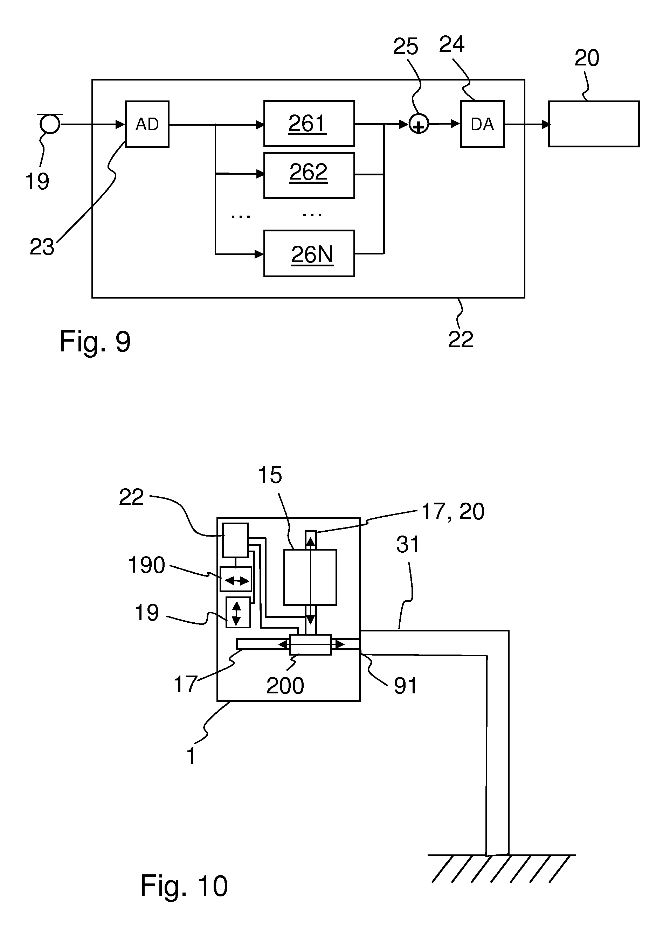

Fig. 9 zeigt schematisch ein Ausführungsbeispiel einer Steuerungsvorrichtung mit mehreren Regelschleifen. Das Prinzip dieser Steuerungsvorrichtung 22 basiert darauf, dass die Steuerungseinrichtung zumindest zwei parallele Regler 261, 262,...,26N aufweist, wobei jeder Regler 261, 262,...,26N das Signal eines Bewegungssensors 19 als Eingangssignal erhält, und wobei die Steuerungseinrichtung 22 einen Addierer 25 aufweist, mit welchem die Ausgangssignale der Regler 261, 262,...,26N addiert werden.

Für die Regelung wird vorzugsweise ein Geschwindigkeitssensor als Bewegungssensor verwendet, dessen Signal proportional zur Bewegung des Armes ist. Das Signal dieses Bewegungssensors wird durch einen Analog-Digital-Wandler 23 der Steuerungsvorrichtung 22 digitalisiert und Reglern 261, 262, ... 26N, die ihrerseits wiederum Filterkaskaden umfassen können, parallel zur Verfügung gestellt. So können gemäß einem Ausführungsbeispiel bis zu 8 verschiedene Filterkaskaden auf demselben Eingangsignal eingesetzt werden. Es zeigt sich, dass für den Anwendungsfall eines Armes 3, wie er in Fig. 1 dargestellt ist, die Übertragungsfunktion sinnvollerweise mit zwei parallelen Reglern 261, 262 verarbeitet wird. Gemäß einer Weiterbildung der Erfindung umfasst dabei einer der Regler 261, 262 eine Kaskade eines Leadlag-Filters und eines PID-Filters. Selbstverständlich kann eines solche Kaskade auch zur Dämpfung andersartiger schwingfähiger Träger günstig sein.

Generell kann die Steuerungseinrichtung 22 ganz allgemein eine beliebige Kaskade von digitalen Filtern umfassen, die vor Ort auswählbar und/oder parametrisierbar sind.

Gemäß einem Ausführungsbeispiel wird dann auf die tieffrequente Mode (0.5Hz) wie sie in Fig. 5A zu erkennen ist, als zweiter Regler 262 eine Reglerkaskade parallel dazu gerechnet, die durch eine Bandpassfilterung bei 0.5Hz, einen Leadlag und ein PID-Filter gegeben ist.

Die einzelnen Ausgangssignale der parallelen Strukturen werden digital mittels eines Addierers 25 addiert und einem Digital-Analog-Wandler 24 zugeführt, welcher das Ansteuersignal für den Aktuator oder Antrieb 20 darstellt.

Die Steuerungsvorrichtung 22 ist, wie spezielle auch im Beispiel der Fig. 9 vorzugsweise digital ausgeführt. Dies ermöglicht eine sehr frei parametrierbare Abstimmung der Regler auf das Schwingverhalten des jeweiligen Trägers.

Auch die in Fig. 9 gezeigte Parallelschaltung der einzelnen Regler 261,...,26N ist in Verbindung mit der Erfindung von besonderem Vorteil, da die Regler auf diese Weise individuell auf die verschiedenen auftretenden und sich überlagernden Schwingungsmoden abstimmen lassen. Jeder der Regler 261,...,26N kann auf diese Weise einzeln auf bestimmte Schwingungsmoden abgestimmt werden. Da sich Schwingungen ungestört überlagern, werden über den Addierer in gleicher Weise durch die Parallelschaltung auch die Steuerungssignale für den Antrieb überlagert.

Bei dem in Fig. 1 und Fig. 2 gezeigten Ausführungsbeispiel ist eine Tilgermasse vorgesehen, welche sich mittels des Antriebs 20 im Wesentlichen horizontal bewegen lässt, um zu vermeiden, dass die Röntgendetektoren durch Schwingungen des Arms 3 bedingt seitlich aus einem von der oder den Röntgenstrahlungsgeneratoren erzeugten, in senkrechter Richtung aufgefächerten Fächerstrahl herauslaufen. Selbstverständlich kann die Erfindung auch zur Dämpfung von Schwingungen in mehreren unterschiedlichen Richtungen erweitert werden.

Fig. 10 zeigt dazu schematisch eine weitere Ausführungsform der Erfindung. Hier ist eine Tilgermasse 15 an einem in zwei Richtungen schwingfähigen Ende eines Arms 3 angebracht. Der Tilger 1 weist zwei aufeinandergesetzte Schlitten 17 auf, die jeweils mit einem eigenen Antrieb 20, beziehungsweise 200 versehen sind. Die Antriebe 20, 200 bewegeb damit die Tilgermasse 15 in unterschiedlichen, vorzugsweise zueinander senkrechten Richtungen. Für jede Richtung ist ein eigener Bewegungssensor 19, 190 vorgesehen, dessen Signale von der Steuerungseinrichtung 22 verarbeitet werden. Die Richtung der Bewegungserfassung der Sensoren 19, 190 ist jeweils mit einem Doppelpfeil gekennzeichnet. Demgemäß ist der Sensor 19 dem Antrieb 20 und der Sensor 190 dem Antrieb 200 zugeordnet.

Die Verarbeitung und Regelung kann dabei in einfacher Weise separat für jeden Antrieb 20, 200 und den zugeordneten Bewegungssensor 19, 190 erfolgen. Demgemäß können anstelle dessen auch zwei unabhängig voneinander arbeitende Steuerungseinrichtungen 22 vorgesehen werden.

Bei dem dargestellten Beispiel werden die Schwingungen in mehreren Richtungen mit einer gemeinsamen Tilgermasse 15 gedämpft. Es können aber auch separate Tilgermassen 15 vorgesehen werden. Weiterhin können die Eingangssignale auch von einem einzelnen, in mehreren Raumrichtungen sensitiven Bewegungssensor 19 erfasst werden. Die Signale des Bewegungssensors 19 können dann in die einzelnen Raumrichtungsanteile zerlegt und separat von der Steuerungseinrichtung 22 verarbeitet werden.

Um also orthogonale Schwingungsmoden zu dämpfen, ist in Weiterbildung der Erfindung, ohne Beschränkung auf das in Fig. 9 gezeigte Beispiel ein Träger mit aktiver Tilgung vorgesehen, bei welchem der aktive Tilger zumindest zwei Antriebe aufweist, mit welchen eine oder mehrere Tilgermassen 15 gesteuert durch die Steuerungseinrichtung 22 in unterschiedliche, vorzugsweise orthogonale Richtungen bewegbar sind. Zueinander orthogonale Richtungen sind vorteilhaft, um ein Übersprechen zu vermeiden. Sind die Richtungen nicht senkrecht zueinander, führt eine Bewegung einer Tilgermasse in einer Richtung auch zu einer Kraft entlang der anderen Richtung. Vorzugsweise regelt die Steuerungseinrichtung die Bewegung der einen oder mehreren Massen 15 entlang der verschiedenen Richtungen unabhängig voneinander anhand von Signalen von Bewegungen entlang dieser Richtungen, wobei die Signale von einem oder mehreren Bewegungssensoren 19, 190 erzeugt werden.

### Bezugszeichenliste

- Aktiver Schwingungstilger: 1
- Arm: 3
- Container: 5
- Zwischenraum zwischen 5, 31: 7
- Gehäuse: 9
- Röntgenscanner: 12
- Röntgendetektor: 13
- Masse: 15
- Schlitten: 17
- Schiene: 18
- Bewegungssensor: 19, 190
- Antrieb: 20, 200
- zueinander bewegliche Teile des Antriebs: 201, 202
- Steuerungseinrichtung: 22
- AD-Wandler: 23
- DA-Wandler: 24
- Addierer: 25
- Ende des Armes 3: 31
- Festes Ende: 33
- Feder: 35, 36
- Dämpfungsglied: 34, 37
- Amplitude der Übertragungsfunktion: 38, 43, 46,
- Phase der Übertragungsfunktion: 39, 44, 47
- Maxima der ÜbertragungsFunktion: 40, 41
- Befestigungsvorrichtung: 91
- Schraubklemme: 93
- Knebelschraube: 95
- Widerlager: 97
- Regler: 261, 262, 26N

## Patentansprüche

1. Aktiver Schwingungstilger (1) zur Schwingungsdämpfung eines freitragenden Abschnitts eines Trägers, der zumindest zwei Schwingungsmoden aufweist, wobei
der Schwingungstilger (1) eine Masse (15) aufweist, die federlos über einen, von einer Steuerungseinrichtung des Schwingungstilgers (1) gesteuerten, Antrieb (20) bewegt wird,
eine Befestigungseinrichtung zur Befestigung des Antriebs (20) an einem zu dämpfenden Träger gekoppelt ist, so dass durch eine Bewegung der Masse (15) relativ zur Befestigungseinrichtung eine durch die Bewegung verursachte Trägheitskraft über den Antrieb (20) direkt auf die Befestigungseinrichtung übertragen wird,
die Steuerungseinrichtung einen Bewegungssensor (19) umfasst, **dadurch gekennzeichnet, dass** die Steuereinrichtung zumindest zwei zur Regelung von Schwingungen unterschiedlicher Frequenzbereiche ausgebildete Regelschleifen umfasst,
zumindest eine der Regelschleifen einen Bandpass umfasst und in einem Frequenzbereich regelt, welcher eine der Schwingungsmoden einschließt, und
die Steuerungseinrichtung eingerichtet ist, in Abhängigkeit von den Signalen des Bewegungssensors (19) den Antrieb (20) zu steuern.

2. Aktiver Schwingungstilger gemäß dem vorstehenden Anspruch, **dadurch gekennzeichnet, dass** die Regelschleifen eingerichtet sind, zu unterschiedlichen Schwingungsfrequenzen Steuersignale erzeugen.

3. Aktiver Schwingungstilger gemäß einem der beiden vorstehenden Ansprüche, wobei die Steuerungseinrichtung zumindest zwei parallele Regler (261, 262,...,26N) aufweist, wobei jeder Regler (261, 262,...,26N) das Signal des Bewegungssensors (19) als Eingangssignal erhält, und wobei die Steuerungseinrichtung einen Addierer (25) aufweist, mit welchem die Ausgangssignale der Regler (261, 262,...,26N) addiert werden.

4. Aktiver Schwingungstilger gemäß einem der vorstehenden Ansprüche, **dadurch gekennzeichnet, dass** der Bewegungssensor einen Geschwindigkeitssensor umfasst.

5. Aktiver Schwingungstilger gemäß einem der vorstehenden Ansprüche, **gekennzeichnet durch** einen Verstärker zur Bereitstellung des Versorgungsstroms des Antriebs (20), wobei die Steuerungseinrichtung eingerichtet ist, als Ausgabesignal ein der Soll-Geschwindigkeit des Antriebs (20) entsprechendes Signal an den Verstärker auszugeben.

6. Aktiver Schwingungstilger gemäß einem der vorstehenden Ansprüche, **dadurch gekennzeichnet, dass** der Antrieb einen Linearmotor umfasst.

7. Aktiver Schwingungstilger gemäß einem der vorstehenden Ansprüche, **dadurch gekennzeichnet, dass** der Schwingungstilger (1) zur Dämpfung von Schwingungen unterhalb von 50 Hz, bevorzugt unterhalb von 20 Hz, insbesondere bevorzugt unterhalb von 10 Hz ausgebildet ist.

8. Träger mit aktiver Tilgung, wobei der Träger an zumindest einem Ende festgehalten ist und einen freitragenden Abschnitt aufweist, an welchem ein Schwingungstilger (1) gemäß einem der vorstehenden Ansprüche befestigt ist.

9. Träger gemäß dem vorstehenden Anspruch, **dadurch gekennzeichnet, dass** der Träger als einseitig festgehaltener Arm (3) ausgebildet ist, wobei der Schwingungstilger (1) am freien Ende (31) des Arms (3) angeordnet ist.

10. Träger gemäß einem der beiden vorstehenden Ansprüche, **dadurch gekennzeichnet, dass**
der Schwingungstilger (1) an einem Punkt des Trägers angeordnet ist, bei dem die Überlagerung zumindest zweier Schwingungsmoden auftritt.

11. Träger gemäß einem der beiden vorstehenden Ansprüche, bei welchem der Schwingungstilger (1) eine Steuerungseinrichtung (22) aufweist, welche zumindest zwei Regelschleifen umfasst, die zur Regelung von Schwingungen unterschiedlicher Frequenzbereiche ausgebildet sind, wobei der Träger zumindest zwei Schwingungsmoden aufweist, und wobei zumindest eine der Regelschleifen als Bandpass ausgebildet ist und in einem Frequenzbereich regelt, welcher eine der Schwingungsmoden einschließt.

12. Träger mit aktiver Tilgung gemäß einem der drei vorstehenden Ansprüche, bei welchem der aktive Tilger (1) zumindest zwei Antriebe (20, 200) aufweist, mit welchen eine oder mehrere Tilgermassen (15) gesteuert durch die Steuerungseinrichtung (22) in orthogonale Richtungen bewegbar sind.

13. Röntgenscanner (12), welcher einen Arm (3) umfasst, welcher an einem Ende verankert und am anderen, freien Ende (31) mit einem Röntgendetektor oder einem Röntgenstrahlungsgenerator versehen ist, wobei an diesem freien Ende (31) ein aktiver Schwingungstilger (1) gemäß einem der Ansprüche 1 bis 7 angeordnet ist.

## Claims

1. Active vibration absorber (1) for damping vibrations of a cantilevered portion of a support comprising at least two vibration modes, wherein
the vibration absorber (1) comprises a mass (15) which is moved without using a spring via a drive (20) which is controlled by a control device of the vibration absorber (1),
a fastening device for fastening the drive (20) to a support to be damped is coupled, so that, by way of a movement of the mass (15) relative to the fastening device, an inertial force caused by the movement is transferred directly to the fastening device via the drive (20),
the control device includes a motion sensor (19), **characterised in that** the control device includes at least two control loops formed to control vibrations of different frequency ranges,
at least one of the control loops includes a bandpass and controls in a frequency range which includes one of the vibration modes, and
the control device is configured to control the drive (20) as a function of the signals of the motion sensor (19).

2. Active vibration absorber as claimed in the preceding claim, **characterised in that** the control loops are configured to generate control signals for different vibration frequencies.

3. Active vibration absorber as claimed in any one of the two preceding claims, wherein the control device comprises at least two parallel controllers (261, 262, ..., 26N), wherein each controller (261, 262,..., 26N) receives the signal of the motion sensor (19) as an input signal, and wherein the control device comprises an adder (25), by means of which the output signals of the controllers (262, 262, ..., 26N) are added.

4. Active vibration absorber as claimed in any one of the preceding claims, **characterised in that** the motion sensor includes a speed sensor.

5. Active vibration absorber as claimed in any one of the preceding claims, **characterised by** an amplifier for providing the supply current of the drive (20), wherein the control device is configured to output to the amplifier, as an output signal, a signal corresponding to the target speed of the drive (20).

6. Active vibration absorber as claimed in any one of the preceding claims, **characterised in that** the drive includes a linear motor.

7. Active vibration absorber as claimed in any one of the preceding claims, **characterised in that** the vibration absorber (1) is formed for damping vibrations below 50 Hz, preferably below 20 Hz, particularly preferably below 10 Hz.

8. Support having active absorption, wherein the support is fixedly held at at least one end and comprises a cantilevered portion to which a vibration absorber (1) as claimed in any one of the preceding claims is fastened.

9. Support as claimed in the preceding claim, **characterised in that** the support is formed as an arm (3) which is fixedly held on one side, wherein the vibration absorber (1) is arranged at the free end (31) of the arm (3).

10. Support as claimed in any one of the two preceding claims, **characterised in that** the vibration absorber (1) is arranged at a point of the support at which the superposition of at least two vibration modes occurs.

11. Support as claimed in any one of the two preceding claims, wherein the vibration absorber (1) comprises a control device (22) which includes at least two control loops which are formed to control vibrations of different frequency ranges, wherein the support comprises at least two vibration modes, and wherein at least one of the control loops is formed as a bandpass and controls in a frequency range which includes one of the vibration modes.

12. Support having active absorption as claimed in any one of the three preceding claims, wherein the active absorber (1) comprises at least two drives (20, 200), by means of which one or more absorber masses (15) can be moved in orthogonal directions, controlled by the control device (22).

13. X-ray scanner (12) which includes an arm (3) which is anchored at one end and at the other, free, end (31) is provided with an X-ray detector or an X-ray generator, wherein at this free end (31) an active vibration absorber (1) as claimed in any one of claims 1 to 7 is arranged.

## Revendications

1. Amortisseur actif de vibrations (1) destiné à amortir les vibrations d'une partie en porte-à-faux d'un support, lequel présente au moins deux modes de vibration, où :
ledit amortisseur de vibrations (1) comporte un poids (15) déplacé sans ressort au moyen d'un entraînement (20) commandé par un dispositif de commande dudit amortisseur de vibrations (1),
un dispositif de fixation pour la fixation de l'entraînement (20) est accouplé à un support à amortir, de telle manière qu'un mouvement du poids (15) par rapport au dispositif de fixation entraîne la transmission directe par l'entraînement (20) au dispositif de fixation d'une force d'inertie due au mouvement,
le dispositif de commande comprend un capteur de mouvement (19), le dispositif de commande étant **caractérisé en ce qu'**il comprend au moins deux boucles d'asservissement prévues pour la régulation de vibrations ayant différentes plages de fréquences,
au moins une des boucles d'asservissement comprend un filtre passe-bande et régule dans une plage de fréquences incluant un des modes de vibration, et
le dispositif de commande est prévu pour commander l'entraînement (20) en fonction des signaux du capteur de mouvement (19).

2. Amortisseur actif de vibrations selon la revendication précédente, **caractérisé en ce que** les boucles d'asservissement sont prévues pour générer des signaux de commande ayant différentes fréquences de vibrations.

3. Amortisseur actif de vibrations selon l'une des deux revendications précédentes, dans lequel le dispositif de commande comporte au moins deux régulateurs (261, 262, ..., 26N) parallèles, chaque régulateur (261, 262, ..., 26N) recevant le signal du capteur de mouvement (19) en tant que signal d'entrée, et dans lequel le dispositif de commande comporte un circuit additionneur (25) au moyen duquel les signaux de sortie des régulateurs (261, 262, ..., 26N) sont additionnés.

4. Amortisseur actif de vibrations selon l'une des revendications précédentes, **caractérisé en ce que** le capteur de mouvement comprend un capteur de vitesse.

5. Amortisseur actif de vibrations selon l'une des revendications précédentes, **caractérisé par** un amplificateur pour la préparation du courant d'alimentation de l'entraînement (20), le dispositif de commande étant prévu pour transmettre à l'amplificateur, comme signal de sortie, un signal correspondant à la vitesse de consigne de l'entraînement (20).

6. Amortisseur actif de vibrations selon l'une des revendications précédentes, **caractérisé en ce que** l'entraînement comprend un moteur linéaire.

7. Amortisseur actif de vibrations selon l'une des revendications précédentes, l'amortisseur de vibrations (1) étant **caractérisé en ce qu'**il est prévu pour amortir des vibrations en dessous de 50 Hz, préférentiellement en dessous de 20 Hz, et tout particulièrement en dessous de 10 Hz.

8. Support à amortissement actif, ledit support étant maintenu par au moins une extrémité et présentant une partie en porte-à-faux sur laquelle est fixé un amortisseur de vibrations (1) selon l'une des revendications précédentes.

9. Support selon la revendication précédente, le support étant **caractérisé en ce qu'**il est réalisé comme bras (3) maintenu sur un seul côté, l'amortisseur de vibrations (1) étant disposé à l'extrémité libre (31) du bras (3).

10. Support selon l'une des deux revendications précédentes, **caractérisé en ce que** l'amortisseur de vibrations (1) est disposé sur un point du support où apparaît une superposition d'au moins deux modes de vibration.

11. Support selon l'une des deux revendications précédentes, dans lequel l'amortisseur de vibrations (1) comporte un dispositif de commande (22) comprenant au moins deux boucles d'asservissement prévues pour la régulation de vibrations ayant différentes plages de fréquences, ledit support présentant au moins deux modes de vibration, et où au moins une des boucles d'asservissement est réalisée comme filtre passe-bande et régule dans une plage de fréquences incluant un des modes de vibration.

12. Support à amortissement actif selon l'une des trois revendications précédentes, dans lequel l'amortisseur (1) actif comporte au moins deux entraînements (20, 200) au moyen desquels un ou plusieurs poids d'inertie (15) sont déplaçables dans des directions orthogonales par commande du dispositif de commande (22).

13. Dispositif de balayage à rayons X (12), comprenant un bras (3) ancré à une extrémité, et pourvu à son autre extrémité libre (31) d'un détecteur de rayons X ou d'un générateur de rayons X, dans lequel un amortisseur actif de vibrations (1) selon l'une des revendications 1 à 7 est disposé sur ladite extrémité libre (31).
